# EUROPEAN PATENT APPLICATION

(11) **EP 4 807 033 A1**
(43) Date of publication of application: **16.09.2026**
(21) Application number: 24895374.7
(22) Date of filing: 08.04.2024
(51) Int. Cl.: C22C 33/04, C22C 38/06, C21D 8/12

(54) **HIGH-AL NON-ORIENTED SILICON STEEL WOUND IRON CORE AND PREPARATION METHOD THEREFOR**

(30) Priority: 30.11.2023 CN 202311620728
(71) Applicant: Institute of Research of Iron and Steel, Jiangsu Province/Sha-Steel, Co. Ltd (CN), Suzhou, Jiangsu 215625 (CN); Zhangjiagang Yangtze River Cold Rolled Plate Co. Ltd, Suzhou, Jiangsu 215625 (CN); Jiangsu Shagang Group Co., Ltd., Suzhou, Jiangsu 215625 (CN)
(72) Inventor: WU, Shengjie, Suzhou, Jiangsu 215625 (CN); MA, Han, Suzhou, Jiangsu 215625 (CN); YUE, Zhongxiang, Suzhou, Jiangsu 215625 (CN); QIAN, Hongwei, Suzhou, Jiangsu 215625 (CN)
(74) Representative: Cleanthous, Marinos
(86) International application number: PCT/CN2024/086647
(87) International publication number: WO 2025/112263

(57) **Abstract**

Disclosed in the present disclosure are a high-Al non-oriented silicon steel wound iron core and a preparation method therefor. In the preparation method, normalization before cold rolling is omitted, and secondary annealing is added after winding formation. 1.0-2.0% of high-Al composition is used as a chemical component, where Al/Si=1.0-1.4, C+S+O+N≤0.007%, and Sn=0.01 × Si+0.04 × Al or Sb=0.01 × Si+0.04 × Al; the heating temperature of hot rolling T₁=1160-20 × [Si]-10 × [Al], the finish rolling temperature T₂=880-20 × [Si]-15 × [Al], and the coiling temperature T₃=600+5 × [Si]-30 × [Al]; and during acid pickling, a mixed solution of NH₄HF₂+HCl is used as an acid pickling solution in both a first and a second stage, and a mixed solution of H₂O₂+HCl is used as an acid pickling solution in a third stage.

## Description

### TECHNICAL FIELD

The present disclosure belongs to the field of iron and steel smelting technologies, relates to a preparation method for a high-Al non-oriented silicon steel wound iron core, and further relates to a high-Al non-oriented silicon steel wound iron core obtained by using the preparation method.

### BACKGROUND

With the development of economy and science and technology, small electric vehicles such as electric bikes, electric tricycles, electric scooters, and balance cars are becoming more and more popular among consumers, which are widely used in the daily short-distance travel and delivery and express delivery industries. Motor, as a power source of an electric vehicle, is an indispensable structure of the electric vehicle.

Currently, a hub of the small electric vehicle mainly employs an external rotor type permanent magnet brushless direct-current motor, and such an in-wheel motor has small diameter and high rotation speed, but high iron core loss.

To reduce iron core loss and improve material utilization of rotor iron core stamped laminations, the in-wheel motor typically employs thin-gauge non-oriented silicon steel for wound lamination. However, during winding, due to tensile stress on an outer side of the non-oriented silicon steel and compressive stress on an inner side thereof, a magnetic yoke portion may undergo plastic deformation or even cracking, resulting in increased iron core loss, deteriorated performance, and reduced product yield.

### SUMMARY

An objective of the present disclosure is to provide a preparation method for a high-Al non-oriented silicon steel wound iron core, thereby solving a technical problem in the prior art that electromagnetic properties and plastic toughness of the non-oriented silicon steel cannot simultaneously meet an application requirement of a rotor wound iron core. In addition, another objective of the present disclosure is further to provide a high-Al non-oriented silicon steel wound iron core prepared by using the preparation method.

To implement one of the objectives of the present disclosure, an implementation of the present disclosure provides a preparation method for a high-Al non-oriented silicon steel wound iron core, including the following procedures carried out in order: molten steel smelting, continuous casting, hot rolling, acid pickling, cold rolling, primary annealing, winding forming, and secondary annealing;
during the molten steel smelting, molten steel finally obtained by smelting includes the following chemical composition in mass percentage: less than or equal to 0.0025% of C, 1.0% to 1.5% of Si, 1.0% to 2.0% of Al, 0.2% to 0.4% of Mn, less than or equal to 0.002% of Nb, less than or equal to 0.002% of V, less than or equal to 0.002% of Ti, less than or equal to 0.03% of Ni, less than or equal to 0.03% of Cr, less than or equal to 0.01% of Cu, less than or equal to 0.002% of N, 0.015% to 0.020% of P, less than or equal to 0.0015% of S, Sn or Sb, as well as Fe and other inevitable impurities, where Sn=0.01 × Si+0.04 × Al, Sb=0.01 × Si+0.04 × Al, and Al/Si=1.0 to 1.4 and C+S+O+N≤0.007%;
during the hot rolling, a continuously cast slab obtained from the continuous casting procedure is subjected to heating, rough rolling, finish rolling, and coiling in sequence to a hot-rolled coil, where a heating temperature T₁ satisfies that T₁=1160-20 × [Si]-10 × [Al], heating time ranges from 160 min to 180 min, a finish rolling start temperature ranges from 910°C to 960°C, a finish rolling temperature T₂ satisfies that T₂=880-20 × [Si]-15 × [Al], and a coiling temperature T₃ satisfies that T₃=600+5 × [Si]-30 × [Al];
during the acid pickling, the acid pickling is carried out in three stages, an acid pickling solution used in a first stage is a mixed solution of NH₄HF₂+HCl, where a concentration of NH₄HF₂ ranges from 60 g/L to 80 g/L, and a concentration of HCl ranges from 150 g/L to 200 g/L; an acid pickling solution used in a second stage is a mixed solution of NH₄HF₂+HCl, where a concentration of NH₄HF₂ ranges from 80 g/L to 100 g/L, and a concentration of HCl ranges from 200 g/L to 250g/L; an acid pickling solution used in a third stage is a mixed solution of H₂O₂+HCl, where a concentration of H₂O₂ ranges from 30 g/L to 50 g/L, and a concentration of HCl ranges from 100 g/L to 120 g/L; and acid pickling time t and acid pickling temperature *T₄* for each of the three stages correspond to each other and satisfy the following formula: $\left[Si\right] + 1.2 \times \left[Al\right] \leq t ⋅ B ⋅ exp \left(-\frac{1268}{0.475 \times \left({T}_{4}+274.15\right)}\right) \leq 0.3 \times \left[Si\right] + 0.2 \times \left[Al\right] + 4 ,$
where B=-0.01 × [NH₄HF₂]²+2 × [HCl]-75, t is in seconds, all temperatures are in °C.

As a further improvement of the implementation of the present disclosure, during the primary annealing, a cold-rolled hard coil obtained from the cold rolling procedure is subjected to high-temperature annealing under a pure N₂ protective atmosphere, where an annealing temperature T₅ satisfies that T₅=900+30 × [Si]+20 × [Al], in °C, and annealing time ranges from 80 s to 100 s; and a steel coil after high-temperature annealing is controlled to complete full recrystallization, with an average grain size from 70 µm to 90 µm.

As a further improvement of the implementation of the present disclosure, during the primary annealing, the steel coil after high-temperature annealing is subjected to cooling, coating, and finishing to obtain non-oriented silicon steel, and a cooling rate is controlled to be ≤10°C/s before cooling to 400°C to 550°C.

As a further improvement of the implementation of the present disclosure, the non-oriented silicon steel obtained from the primary annealing procedure has an iron loss P_{1.5/50} of ≤3.0 W/kg, a magnetic induction B₅₀₀₀ of ≥1.67 T, a yield strength YS ranging from 200 MPa to 260 MPa, and an elongation of ≥25%.

As a further improvement of the implementation of the present disclosure, the secondary annealing procedure is carried out under a pure N₂ protective atmosphere at an annealing temperature T₆ satisfies that T₆=800+2000 × σ, in ° C, and σ is a strain of the iron core during winding formation.

As a further improvement of the implementation of the present disclosure, during the winding formation, after the non-oriented silicon steel obtained from the primary annealing procedure is slit, a tooth slot portion is subjected to punching, then a magnetic yoke portion is processed via winding formation to produce the high-Al non-oriented silicon steel wound iron core, and a strain σ of the iron core during winding formation is controlled to be 2% to 8%.

As a further improvement of the implementation of the present disclosure, during the hot rolling, the continuously cast slab is fed into a heating furnace for heating, and a charging temperature of the continuously cast slab ranges from 500°C to 600°C; during the rough rolling, two stands are used to conduct six passes of rough rolling, comprising one pass of rough rolling in a first stand and five passes of roughing rolling in the second stand; during finish rolling, a seven-stand finishing mill is used to conduct seven passes of finish rolling; and a total reduction rate of the finish rolling is controlled to be 93% to 94%, and a thickness of the hot-rolled coil ranges from 1.8 mm to 2.0 mm.

As a further improvement of the implementation of the present disclosure, during the cold rolling, hot-rolled strip steel after the acid pickling procedure is subjected to continuous cold rolling using a five-stand cold rolling mill to obtain a cold-rolled hard coil with a thickness ranging from 0.3 mm to 0.4 mm, a reduction ratio of each pass controlled to be 25% to 35%, and a total reduction ratio is controlled to be 80% to 90%.

To implement the objective described above, an implementation of the present disclosure further provides a high-Al non-oriented silicon steel wound iron core, which is prepared by using the preparation method for the high-Al non-oriented silicon steel wound iron core described above.

As a further improvement of the implementation of the present disclosure, the high-Al non-oriented silicon steel wound iron core has an iron loss P_{1.5/50} of ≤2.5 W/kg, and a magnetic induction B₅₀₀₀ of ≥1.72 T.

Compared with the prior art, the present disclosure has beneficial effects as follows.
(1) Based on a chemical composition design solution, on the one hand, by controlling the contents of alloy elements Si and Al and the content relationship therebetween, a finished product exhibits improved magnetic induction while maintaining good iron loss, as well as excellent plasticity and elongation, which can satisfy production requirements for wound iron core processing. Further, by adding a microalloying element Sn or Sb and limiting the relationship between the content of Sn or Sb and the contents of Al and Si, the principle that Sn or Sb is easy to segregate on a surface of the strip steel can be utilized to avoid the formation of dense AlN during annealing, thereby promoting microstructure optimization of a finally prepared non-oriented silicon steel matrix, and enabling the non-oriented silicon steel matrix to obtain excellent elongation and electromagnetic properties that satisfy the production requirements for the wound iron core. Overall, through the foregoing chemical composition design, electrical resistivity of the non-oriented silicon steel can be increased, eddy current loss can be reduced, and magnetic properties can be improved, and the non-oriented silicon steel may also have excellent hot workability and cold workability to achieve stable rolling and enabling winding processing.
(2) The non-oriented silicon steel obtained after primary annealing procedure has an iron loss P_{1.5/50} of ≤3.0 W/kg, a magnetic inductance B₅₀₀₀ of ≥1.67 T, a yield strength YS ranging from 200 MPa to 260MPa, and an elongation of ≥25%, which have not only excellent magnetic properties but also good mechanical properties, thereby laying a foundation for winding formation of the iron core.
(3) The preparation method is based on the low-Si and high-Al chemical composition design solution, so that the alloy composition is simple, and the cost is reduced. Low iron core loss, high magnetic induction, low yield strength, and high elongation of the prepared non-oriented silicon steel are conducive to winding formation of the iron core without cracking. Furthermore, the iron core after winding formation is subjected to secondary annealing, plastic deformation generated during the winding formation of the iron core can be used to induce secondary growth of ferrite grains to reduce the iron core loss, thereby solving the problem of damage to the magnetic properties of the iron core caused by plastic strain generated during winding and bending deformations of the wound iron core, and improving a yield rate and working efficiency of an in-wheel motor iron core. Ultimately, the prepared high-Al non-oriented silicon steel wound iron core achieves excellent magnetic properties with an iron loss P_{1.5/50} of ≤2.5 W/kg and a magnetic induction B₅₀₀₀ of ≥1.72 T, and has qualified electromagnetic properties when applied to products such as in-wheel motors, thereby satisfying energy efficiency requirements of the in-wheel motor and other products. Moreover, omitting the normalizing procedure before cold rolling simplifies the production flow, which not only reduces the manufacturing cost of in-wheel motor but also significantly improves the performance of the in-wheel motor.

### DETAILED DESCRIPTION OF THE EMBODIMENTS

The present disclosure is further described in detail below with reference to specific implementations. However, these implementations are not intended to limit the present disclosure, and the structural, method, or functional transformations made by those skilled in the art in accordance with these implementations are included in the scope of protection of the present disclosure.

An implementation of the present disclosure provides a preparation method for a high-Al non-oriented silicon steel wound iron core, and a high-Al non-oriented silicon steel wound iron core obtained by using the preparation method.

In this implementation, a chemical composition design solution of the high-Al non-oriented silicon steel wound iron core is as follows, where the high-Al non-oriented silicon steel wound iron core is prepared from the following chemical composition in mass percentage: less than or equal to 0.0025% of C, 1.0% to 1.5% of Si, 1.0% to 2.0% of Al, 0.2% to 0.4% of Mn, less than or equal to 0.002% of Nb, less than or equal to 0.002% of V, less than or equal to 0.002% of Ti, less than or equal to 0.03% of Ni, less than or equal to 0.03% of Cr, less than or equal to 0.01% of Cu, less than or equal to 0.002% of N, 0.015% to 0.020% of P, less than or equal to 0.0015% of S, and Sn or Sb, with the balance being Fe and other inevitable impurities, where Sn=0.01 × Si+0.04 × Al, Sb=0.01 × Si+0.04 × Al, and Al/Si=1.0 to 1.4 and C+S+O+N≤0.007%.

That is, in the foregoing chemical composition design solution, one of Sn or Sb is included.

Specifically, the high-Al non-oriented silicon steel wound iron core includes the chemical composition in mass percentage as follows: less than or equal to 0.0025% of C, 1.0% to 1.5% of Si, 1.0% to 2.0% of Al, 0.2% to 0.4% of Mn, less than or equal to 0.002% of Nb, less than or equal to 0.002% of V, less than or equal to 0.002% of Ti, less than or equal to 0.03% of Ni, less than or equal to 0.03% of Cr, less than or equal to 0.01% of Cu, less than or equal to 0.002% of N, 0.015% to 0.020% of P, less than or equal to 0.0015% of S, and Sn=0.01 × Si+0.04 × Al, with the balance being Fe and other inevitable impurities, where Al/Si=1.0 to 1.4 and C+S+O+N≤0.007%.

Alternatively, the high-Al non-oriented silicon steel wound iron core includes the chemical composition in mass percentage as follows: less than or equal to 0.0025% of C, 1.0% to 1.5% of Si, 1.0% to 2.0% of Al, 0.2% to 0.4% of Mn, less than or equal to 0.002% of Nb, less than or equal to 0.002% of V, less than or equal to 0.002% of Ti, less than or equal to 0.03% of Ni, less than or equal to 0.03% of Cr, less than or equal to 0.01% of Cu, less than or equal to 0.002% of N, 0.015% to 0.020% of P, less than or equal to 0.0015% of S, and Sb=0.01 × Si+0.04 × Al, with the balance being Fe and other inevitable impurities, where Al/Si=1.0 to 1.4 and C+S+O+N≤0.007%.

Based on the chemical composition design solution, on the one hand, adding Si, Al and Mn can improve electrical resistivity of the non-oriented silicon steel and reduce the iron loss. However, with the increase of the contents of Si, Al and Mn, the saturation magnetic induction decreases accordingly, and the magnetic permeability declines. As the Si content increases, the toughness of the steel drops sharply**,** making it highly prone to strip breakage during cold rolling. According to the present disclosure, by controlling the contents of alloy elements Si and Al and the content relationship therebetween, a finished product exhibits improved magnetic induction while maintaining good iron loss, as well as excellent plasticity and elongation, which can satisfy production requirements for wound iron core processing. Further, by adding the microalloying element Sn or Sb and limiting the relationship between the content of Sn or Sb and the contents of Al and Si, the principle that Sn or Sb is easy to segregate on a surface of the strip steel can be utilized to avoid the formation of dense AlN during annealing, thereby promoting microstructure optimization of a finally prepared non-oriented silicon steel matrix, and enabling the non-oriented silicon steel matrix to obtain excellent elongation and electromagnetic properties that satisfy the production requirements for the wound iron core.

Overall, through the foregoing chemical composition design, electrical resistivity of the non-oriented silicon steel can be increased, eddy current loss can be reduced, and magnetic properties can be improved, and the non-oriented silicon steel may also have excellent hot workability and cold workability to achieve stable rolling and enabling winding processing.

The following describes a preparation method for a high-Al non-oriented silicon steel wound iron core in detail. The following procedures are carried out in order: molten steel smelting, continuous casting, hot rolling, acid pickling, cold rolling, primary annealing, winding forming, and secondary annealing.

### (1) Molten steel smelting

A finally obtained molten steel from smelting includes the following chemical composition in mass percentage: less than or equal to 0.0025% of C, 1.0% to 1.5% of Si, 1.0% to 2.0% of Al, 0.2% to 0.4% of Mn, less than or equal to 0.002% of Nb, less than or equal to 0.002% of V, less than or equal to 0.002% of Ti, less than or equal to 0.03% of Ni, less than or equal to 0.03% of Cr, less than or equal to 0.01% of Cu, less than or equal to 0.002% of N, 0.015% to 0.020% of P, less than or equal to 0.0015% of S, and Sn or Sb, with the balance being Fe and other inevitable impurities, where Sn=0.01 × Si+0.04 × Al, Sb=0.01 × Si+0.04 × Al, and Al/Si=1.0 to 1.4 and C+S+O+N≤0.007%.

That is, the molten steel smelting procedure is carried out in accordance with the chemical composition design solution of the foregoing high-Al non-oriented silicon steel wound iron core, such that the chemical composition of the finally obtained molten steel is identical to that of the finally prepared high-Al non-oriented silicon steel wound iron core.

Specifically, the molten steel smelting procedure includes the following steps carried out in sequence.

### a. Hot metal KR (Kanbara Reactor) desulfurization

Hot metal is subjected to desulfurization treatment in a KR desulfurization device, a slag skimming rate is controlled to be >95%, so that an S content in the hot metal is ≤0.001% upon exiting the station.

### b. Converter smelting

The hot metal after desulfurization is fed into a converter to be mixed with scrap to form liquid steel, followed by dephosphorization and desiliconization. Tapping is carried out when contents of S, P and N in the molten steel reach are as follows: less than or equal to 0.002% of S, less than or equal to 0.02% of P, and less than or equal to 0.0025% of N, respectively. The scrap consists entirely of recycled non-oriented silicon steel scrap, accounting for 12% to 16% of the total converter charge.

### c. RH (Ruhrstahl-Heraeus) vacuum refining

RH vacuum circulating degassing equipment is configured to conduct vacuum decarburization, deoxidation, alloying and inclusion removal on the molten steel after converter smelting.

During RH vacuum refining, element O in the molten steel during converter tapping is used for decarbonization, and an alloying element Si is used for deoxidation. During alloying, the alloying element Si is added prior to an alloying element Al, and then metal Sn or Sb is added based on the actual Si/Al content. Finally, clean circulation is carried out under a vacuum condition to effectively remove inclusions from the molten steel.

### (2) Continuous casting

The molten steel obtained from the molten steel smelting procedure is continuously cast into a continuously cast slab with a thickness of 220 mm by using continuous casting equipment. The chemical composition of the obtained continuously cast slab is the same as that of the molten steel finally obtained from the molten steel smelting procedure, and is completely the same as that of the finally prepared high-Al non-oriented silicon steel wound iron core.

A continuous casting mold employs a special mold flux, and the mold flux includes the following chemical composition in mass percentage: 28% to 36% of SiO₂, less than or equal to 5% of MgO, 16% to 24% of CaO, less than or equal to 5% of Fe₂O₃, less than or equal to 5% of Al₂O₃, 13% to 15% of Na₂O, 8% to 14% of CaF, 1.1% to 1.5% of Li₂O, 4.5% to 5.5% of B₂O₃, less than or equal to 1.5% of T.C, and 1.9% to 2.1% of heating agent. By means of composition design of the mold flux, Li₂O, B₂O₃ and the heating agent are added into the mold flux, which not only inhibits the redox reaction between Al in the molten steel and SiO₂ in the mold flux during continuous casting, but also improves heat transfer during continuous casting to provide a lubricating effect**,** thereby preventing surface cracks and other defects from occurring on the continuous casting slab.

Preferably, the heating agent is a calcium-silicon alloy, where a mass percentage of Ca is 40%, and a mass percentage of Si is 60%.

Preferably, the mold flux has a binary basicity ranging from 0.61 to 0.63, a melting point of 1000±40°C, and viscosity of 0.2±0.05 Pa·s.

Preferably, during continuous casting, electromagnetic stirring is used in a secondary cooling zone, with a stirring current of 400 A, a stirring frequency of 8 Hz, and a continuous casting speed of 1.2±0.1 m/min.

### (3) Hot rolling

The continuously cast slab obtained from the continuous casting procedure is subjected to heating, rough rolling, finish rolling and coiling to obtain a hot-rolled coil, where a heating temperature T₁ satisfies that T₁=1160-20 × [Si]-10 × [Al], the heating time ranges from 160 min to 180 min, a finish rolling start temperature ranges from 910°C to 960°C, a finish rolling temperature T₂ satisfies that T₂=880-20 × [Si]-15 × [Al], and a coiling temperature T₃ satisfies that T₃=600+5 × [Si]-30 × [Al],
where [Si] represents a mass percentage of element Si in the continuously cast slab, and [Al] represents a mass percentage of element Al in the continuously cast slab. For example, if the content of element Si in the continuously cast slab is 1.2%, [Si]=1.2. The following descriptions are the same.

As such, based on the contents of elements Si and Al in the chemical composition, the temperature of each step during the hot rolling is controlled, and a type and a thickness of the Al₂O₃ and SiO₂ composite oxide can be controlled.

Preferably, the continuously cast slab is fed into a heating furnace for heating, where a charging temperature of the continuously cast slab ranges from 500°C to 600°C; during the rough rolling, two stands are used to conduct six passes of rough rolling, comprising one pass of rough rolling in a first stand and five passes of roughing rolling in the second stand; during finish rolling, a seven-stand finishing mill is used to conduct seven passes of finish rolling; and a total reduction rate of the finish rolling is controlled to be 93% to 94%, and a thickness of the hot-rolled coil ranges from 1.8 mm to 2.0 mm.

### (4) Acid pickling

The acid pickling is carried out in three stages. An acid pickling solution used in a first stage is a mixed solution of NH₄HF₂+HCl, where a concentration of NH₄HF₂ ranges from 60 g/L to 80 g/L, and a concentration of HCl ranges from 150 g/L to 200 g/L. An acid pickling solution used in a second stage is a mixed solution of NH₄HF₂+HCl, where a concentration of NH₄HF₂ ranges from 80 g/L to 100 g/L, and a concentration of HCl ranges from 200 g/L to 250g/L. An acid pickling solution used in a third stage is a mixed solution of H₂O₂+HCl, where a concentration of H₂O₂ ranges from 30 g/L to 50 g/L, and a concentration of HCl ranges from 100 g/L to 120 g/L. Acid pickling time t and acid pickling temperature T₄ for each of the three stages correspond to each other and satisfy the following formula: $\left[Si\right] + 1.2 \times \left[Al\right] \leq t ⋅ B ⋅ exp \left(-\frac{1268}{0.475 \times \left({T}_{4}+274.15\right)}\right) \leq 0.3 \times \left[Si\right] + 0.2 \times \left[Al\right] + 4 ,$

B=-0.01 × [NH₄HF₂]²+2 × [HCl]-75, t is in seconds, all temperatures are in °C.

[NH₄HF₂] represents s a concentration value of NH₄HF₂ in the mixed solution, and [HCl] represents a concentration value of HCl in the mixed solution. For example, when the concentration of NH₄HF₂ is 80 g/L, [NH₄HF₂]=80. As NH₄HF₂ is not added in the third stage, [NH₄HF₂]=0.

In the foregoing acid pickling manner, the mixed solution of NH₄HF₂+HCl is used to replace a conventional HCl acid pickling process. Through a synergistic control of NH₄HF₂ concentration, HCl concentration, and the correlations between the acid pickling time, the acid pickling temperature, and the NH₄HF₂ concentration and HCl concentration**,** the Al₂O₃ and SiO₂ oxide layers on the hot-rolled coil can be cleaned, thereby overcoming the difficulty in acid pickling of Al₂O₃ on the high-Al steel surface. Furthermore, the mixed solution of H₂O₂ + HCl is used in the third acid-pickling stage, thereby avoiding the occurrence of intergranular corrosion on the surface of the hot-rolled coil.

### (5) Cold rolling

Preferably, hot-rolled strip steel after the acid pickling procedure is subjected to continuous cold rolling using a five-stand cold rolling mill to obtain a cold-rolled hard coil with a thickness of a 0.3 mm to 0.4 mm, where a reduction ratio of each pass is controlled to be 25% to 35%, and a total reduction ratio is controlled to be 80% to 90%.

### (6) Primary annealing

The cold-rolled hard coil obtained from the cold rolling procedure is subjected to continuous high-temperature annealing, and an insulating coating is then applied to both upper and lower surfaces of the strip steel to obtain the non-oriented silicon steel. A specific operation of a coating technology can be implemented by using an existing feasible coating technology. Details are not described herein again.

Preferably, the cold-rolled hard coil obtained from the cold rolling procedure is subjected to high-temperature annealing under a pure N₂ protective atmosphere, where an annealing temperature T₅ satisfies that T₅=900+30 × [Si]+20 × [Al], in °C, and annealing time ranges from 80 s to 100 s; and a steel coil after high-temperature annealing is controlled to complete full recrystallization, with an average grain size from 70 µm to 90 µm. The adoption of the pure N₂ protective atmosphere can reduce nodulation caused by the reaction between the strip steel and a carbon sleeve furnace roll during high-temperature annealing.

Preferably, during cooling, a cooling rate is controlled to be ≤10°C/s before cooling to 400°C to 550°C.

The non-oriented silicon steel obtained after the primary annealing procedure has an iron loss P_{1.5/50} of ≤3.0 W/kg, a magnetic inductance B₅₀₀₀ of ≥1.67 T, a yield strength YS ranging from 200 MPa to 260MPa, and an elongation of ≥25%, which have not only excellent magnetic properties but also good mechanical properties, thereby laying a foundation for winding formation of the iron core.

### (7) Winding formation

After the non-oriented silicon steel obtained from the primary annealing procedure is slit, a tooth slot portion is subjected to punching, then a magnetic yoke portion is processed via winding formation to produce the high-Al non-oriented silicon steel wound iron core, and a strain σ of the iron core during winding formation is controlled to be 2% to 8%.

### (8) Secondary annealing

The high-Al non-oriented silicon steel wound iron core obtained by winding formation is subjected to secondary annealing under the pure N₂ protective atmosphere, where an annealing temperature T₆ satisfies that T₆=800+2000 × σ, in ° C.

Through the secondary annealing process, plastic deformation generated during the winding formation of the iron core can be used to induce secondary growth of ferrite grains to reduce the iron core loss, thereby solving the problem of damage to the magnetic properties of the iron core caused by plastic strain generated during winding and bending deformations of the wound iron core, and improving a yield rate and working efficiency of an in-wheel motor iron core. Furthermore, the electromagnetic properties of the iron core are improved by utilizing a quantitative relationship between the annealing temperature and the strain σ of the wound iron core, thereby maximizing the inherent physical and electromagnetic properties of the material itself.

The preparation method is based on the low-Si and high-Al chemical composition design solution, so that the alloy composition is simple, and the cost is reduced. Low iron core loss, high magnetic induction, low yield strength, and high elongation of the prepared non-oriented silicon steel are conducive to winding formation of the iron core without cracking. Furthermore, the iron core after winding formation is subjected to secondary annealing, plastic deformation generated during the winding formation of the iron core can be used to induce secondary growth of ferrite grains to reduce the iron core loss, thereby solving the problem of damage to the magnetic properties of the iron core caused by plastic strain generated during winding and bending deformations of the wound iron core, and improving a yield rate and working efficiency of an in-wheel motor iron core. Moreover, the elimination of a normalizing procedure prior to cold rolling simplifies the production flow, which not only reduces the manufacturing cost of in-wheel motor but also significantly improves the performance of the in-wheel motor.

An implementation of the present disclosure provides a high-Al non-oriented silicon steel wound iron core, which is prepared using the foregoing preparation method.

It is detected that the prepared high-Al non-oriented silicon steel wound iron core achieves excellent magnetic properties with an iron loss P_{1.5/50} of ≤2.5 W/kg and a magnetic induction B₅₀₀₀ of ≥1.72 T, and has qualified electromagnetic properties when applied to products such as in-wheel motors, thereby satisfying energy efficiency requirements of the in-wheel motor and other products.

The detailed descriptions listed above are merely specific illustrations of feasible embodiments of the present disclosure, and are not intended to limit the protection scope of the present disclosure. All equivalent embodiments or changes made without departing from the technical spirit of the present disclosure shall be included in the scope of protection of the present disclosure.

The following further describes beneficial effects of the present disclosure by using three embodiments. Certainly, the three embodiments are only a part, not all, of the many variation embodiments included in the present disclosure.

Three embodiments each provide a high-Al non-oriented silicon steel wound iron core. The molten steel, the continuously cast slab, and the finally prepared high-Al non-oriented silicon steel wound iron core obtained by molten steel smelting in each embodiment have the same chemical composition. The chemical composition of the three embodiments is detailed in Table 1. Further, in addition to chemical elements shown in Table 1, the chemical composition of the three embodiments is as follows: less than or equal to 0.0025% of C, less than or equal to 0.002% of Nb, less than or equal to 0.002% of V, less than or equal to 0.002% of Ti, less than or equal to 0.03% of Ni, less than or equal to 0.03% of Cr, less than or equal to 0.01% of Cu, less than or equal to 0.002% of N, 0.015% to 0.020% of P, less than or equal to 0.0015% of S, less than or equal to 0.007% of C+S+O+N, and the balance being Fe and inevitable impurities.

**Table 1**

| Embodiment | Chemical composition, wt% | | | | |
|---|---|---|---|---|---|
| | Si | Al | Mn | Sn | Sb |
| 1 | 1.0 | 1.0 | 0.40 | 0.05 | - |
| 2 | 1.2 | 1.5 | 0.32 | - | 0.072 |
| 3 | 1.5 | 2.0 | 0.21 | 0.095 | - |

### Embodiment 1

A preparation method for a high-Al non-oriented silicon steel wound iron core includes the following procedures.

### (1) Molten steel smelting

The chemical composition of the molten steel finally obtained by smelting is described above, and details are provided in Table 1.

Specifically, the molten steel smelting procedure includes the following steps carried out in sequence.

### a. Hot metal KR desulfurization

Hot metal is subjected to desulfurization treatment in a KR desulfurization device, a slag skimming rate is controlled to be 97%, so that an S content in the hot metal is 0.0008% upon exiting the station.

### b. Converter smelting

The hot metal after desulfurization is fed into a converter to be mixed with scrap to form liquid steel, followed by dephosphorization and desiliconization. Tapping is carried out when contents of S, P and N in the molten steel reach are as follows: 0.0018% of S, 0.02% of P, and 0.0016% of N, respectively. The scrap consists entirely of recycled non-oriented silicon steel, accounting for 15% of the total converter charge.

### c. RH vacuum refining

RH vacuum circulating degassing equipment is configured to conduct vacuum decarburization, deoxidation, alloying and inclusion removal on the molten steel after converter smelting. During RH vacuum refining, element O in the molten steel during converter tapping is used for decarbonization, and an alloying element Si is used for deoxidation. During alloying, the alloying element Si is added prior to an alloying element Al, and then metal Sn or Sb is added based on the actual Si/Al content. Finally, clean circulation is carried out under a vacuum condition to effectively remove inclusions from the molten steel.

### (2) Continuous casting

The molten steel obtained from the molten steel smelting procedure is continuously cast into a continuously cast slab with a thickness of 220 mm by using continuous casting equipment. The chemical composition of the continuously cast slab is described above, and details are provided in Table 1.

A continuous casting mold employs a special mold flux, and the mold flux includes the following chemical composition in mass percentage: 28% to 36% of SiO₂, less than or equal to 5% of MgO, 16% to 24% of CaO, less than or equal to 5% of Fe₂O₃, less than or equal to 5% of Al₂O₃, 13% to 15% of Na₂O, 8% to 14% of CaF, 1.1% to 1.5% of Li₂O, 4.5% to 5.5% of B₂O₃, less than or equal to 1.5% of T.C, and 1.9% to 2.1% of heating agent. The heating agent is a calcium-silicon alloy, where a mass percentage of Ca is 40%, and a mass percentage of Si is 60%. The mold flux has a binary basicity ranging from 0.61 to 0.63, a melting point of 1000±40°C, and viscosity of 0.2±0.05 Pa·s.

During continuous casting, electromagnetic stirring is used in a secondary cooling zone, with a stirring current of 400 A, a stirring frequency of 8 Hz, and a continuous casting speed of 1.2±0.1 m/min.

### (3) Hot rolling

The continuously cast slab obtained from the continuous casting procedure is fed into the heating furnace for heating, where a charging temperature of the continuously cast slab is 580°C, a heating temperature T₁ is 1130°C, the heating time ranges from 160 min to 180 min. Then, the continuously cast slab is fed into a two-stand rough rolling mill for six passes of rough rolling, specifically, the continuously cast slab is subjected to one pass of rough rolling on a first stand and is then fed into a second stand for five passes of roughing rolling. Subsequently, continuously cast slab is fed into a seven-stand finishing mill for seven passes of finish rolling, where a finish rolling start temperature is 940°C, a finish rolling temperature T₂ is 845°C, and a total reduction rate of the finish rolling is 93%. Ultimately, a hot-rolled coil with a thickness of 2.0 mm is obtained by coiling at a temperature T₃ of 575°C.

### (4) Acid pickling

The acid pickling is carried out in three stages. An acid pickling solution used in a first stage is a mixed solution of NH₄HF₂+HCl, where a concentration of NH₄HF₂ is 80 g/L, a concentration of HCl is 155 g/L, an acid pickling temperature T₄ is 80°C, and acid pickling time t is 20 s. An acid pickling solution used in a second stage is a mixed solution of NH₄HF₂+HCl, where a concentration of NH₄HF₂ is 95 g/L, a concentration of HCl is 200 g/L, an acid pickling temperature T₄ is 90°C, and acid pickling time t is 15 s. An acid pickling solution used in a third stage is a mixed solution of H₂O₂+HCl, where a concentration of H₂O₂ is 30 g/L, a concentration of HCl is 100 g/L, an acid pickling temperature T₄ is 95°C, and acid pickling time t is 30 s.

### (5) Cold rolling

Hot-rolled strip steel after the acid pickling procedure is subjected to continuous cold rolling using a five-stand cold rolling mill to obtain a cold-rolled hard coil with a thickness of a 0.35 mm, where a reduction ratio of each pass is controlled to be 25% to 35%, and a total reduction ratio is controlled to be 82.5%.

### (6) Primary annealing

The cold-rolled hard coil obtained from the cold rolling procedure is fed into an annealing furnace for high-temperature annealing under a pure N₂ protective atmosphere, where an annealing temperature T₅ is 950°C, and annealing time is 82 s. A steel coil after high-temperature annealing is controlled to complete full recrystallization, with an average grain size of 83 µm. Afterwards, the steel coil after high-temperature annealing is subjected to cooling, coating and finishing to obtain non-oriented silicon steel. During cooling, a cooling rate is controlled to be ≤10°C/s before cooling to 400°C to 550°C.

It is detected that the iron loss P_{1.5/50}, the magnetic induction B₅₀₀₀, the yield strength YS and the elongation of the non-oriented silicon steel after primary annealing procedure are shown in Table 2.

### (7) Winding formation

After the non-oriented silicon steel obtained from the primary annealing procedure is slit, a tooth slot portion is subjected to punching, then a magnetic yoke portion is processed via winding formation to produce the high-Al non-oriented silicon steel wound iron core, and a strain σ of the iron core during winding formation is controlled to be 2%.

### (8) Secondary annealing

The high-Al non-oriented silicon steel wound iron core obtained by winding formation is subjected to secondary annealing under the pure N₂ protective atmosphere, where an annealing temperature T₆ is 840°C.

It is detected that the iron loss P_{1.5/50} and the magnetic induction B₅₀₀₀ of the non-oriented silicon steel after secondary annealing procedure are shown in table T2.

### Embodiment 2

A preparation method for a high-Al non-oriented silicon steel wound iron core includes the following procedures.

### (1) Molten steel smelting

The chemical composition of the molten steel finally obtained by smelting is described above, and details are provided in Table 1.

Specifically, the molten steel smelting procedure includes the following steps carried out in sequence.

### a. Hot metal KR desulfurization

Hot metal is subjected to desulfurization treatment in a KR desulfurization device, a slag skimming rate is controlled to be 98%, so that an S content in the hot metal is 0.0009% upon exiting the station.

### b. Converter smelting

The hot metal after desulfurization is fed into a converter to be mixed with scrap to form liquid steel, followed by dephosphorization and desiliconization. Tapping is carried out when contents of S, P and N in the molten steel reach are as follows: 0.0016% of S, 0.017% of P, and 0.0014% of N, respectively. The scrap consists entirely of recycled non-oriented silicon steel scrap, accounting for 16% of the total converter charge.

### c. RH vacuum refining

RH vacuum circulating degassing equipment is configured to conduct vacuum decarburization, deoxidation, alloying and inclusion removal on the molten steel after converter smelting. During RH vacuum refining, element O in the molten steel during converter tapping is used for decarbonization, and an alloying element Si is used for deoxidation. During alloying, the alloying element Si is added prior to an alloying element Al, and then metal Sn or Sb is added based on the actual Si/Al content. Finally, clean circulation is carried out under a vacuum condition to effectively remove inclusions from the molten steel.

### (2) Continuous casting

The molten steel obtained from the molten steel smelting procedure is continuously cast into a continuously cast slab with a thickness of 220 mm by using continuous casting equipment. The chemical composition of the continuously cast slab is described above, and details are provided in Table 1.

A continuous casting mold employs a special mold flux, and the mold flux includes the following chemical composition in mass percentage: 28% to 36% of SiO₂, less than or equal to 5% of MgO, 16% to 24% of CaO, less than or equal to 5% of Fe₂O₃, less than or equal to 5% of Al₂O₃, 13% to 15% of Na₂O, 8% to 14% of CaF, 1.1% to 1.5% of Li₂O, 4.5% to 5.5% of B₂O₃, less than or equal to 1.5% of T.C, and 1.9% to 2.1% of heating agent. The heating agent is a calcium-silicon alloy, where a mass percentage of Ca is 40%, and a mass percentage of Si is 60%. The mold flux has a binary basicity ranging from 0.61 to 0.63, a melting point of 1000±40°C, and viscosity of 0.2±0.05 Pa·s.

During continuous casting, electromagnetic stirring is used in a secondary cooling zone, with a stirring current of 400 A, a stirring frequency of 8 Hz, and a continuous casting speed of 1.2±0.1 m/min.

### (3) Hot rolling

The continuously cast slab obtained from the continuous casting procedure is fed into the heating furnace for heating, where a charging temperature of the continuously cast slab is 600°C, a heating temperature T₁ is 1121°C, the heating time ranges from 160 min to 180 min. Then, the continuously cast slab is fed into a two-stand rough rolling mill for six passes of rough rolling, specifically, the continuously cast slab is subjected to one pass of rough rolling on a first stand and is then fed into a second stand for five passes of roughing rolling. Subsequently, continuously cast slab is fed into a seven-stand finishing mill for seven passes of finish rolling, where a finish rolling start temperature is 950°C, a finish rolling temperature T₂ is 834°C, and a total reduction rate of the finish rolling is 93%. Ultimately, a hot-rolled coil with a thickness of 2.0 mm is obtained by coiling at a temperature T₃ of 561°C.

### (4) Acid pickling

The acid pickling is carried out in three stages. An acid pickling solution used in a first stage is a mixed solution of NH₄HF₂+HCl, where a concentration of NH₄HF₂ is 70 g/L, a concentration of HCl is 170 g/L, an acid pickling temperature T₄ is 88°C, and acid pickling time t is 20 s. An acid pickling solution used in a second stage is a mixed solution of NH₄HF₂+HCl, where a concentration of NH₄HF₂ is 90 g/L, a concentration of HCl is 220 g/L, an acid pickling temperature T₄ is 92°C, and acid pickling time t is 15 s. An acid pickling solution used in a third stage is a mixed solution of H₂O₂+HCl, where a concentration of H₂O₂ is 40 g/L, a concentration of HCl is 110 g/L, an acid pickling temperature T₄ is 95°C, and acid pickling time t is 35 s.

### (5) Cold rolling

Hot-rolled strip steel after the acid pickling procedure is subjected to continuous cold rolling using a five-stand cold rolling mill to obtain a cold-rolled hard coil with a thickness of a 0.30 mm, where a reduction ratio of each pass is controlled to be 25% to 35%, and a total reduction ratio is controlled to be 85%.

### (6) Primary annealing

The cold-rolled hard coil obtained from the cold rolling procedure is fed into an annealing furnace for high-temperature annealing under a pure N₂ protective atmosphere, where an annealing temperature T₅ is 966°C, and annealing time is 90 s. A steel coil after high-temperature annealing is controlled to complete full recrystallization, with an average grain size of 90 µm. Afterwards, the steel coil after high-temperature annealing is subjected to cooling, coating and finishing to obtain non-oriented silicon steel. During cooling, a cooling rate is controlled to be ≤10°C/s before cooling to 400°C to 550°C.

It is detected that the iron loss P_{1.5/50}, the magnetic induction B₅₀₀₀, the yield strength YS and the elongation of the non-oriented silicon steel after primary annealing procedure are shown in Table 2.

### (7) Winding formation

After the non-oriented silicon steel obtained from the primary annealing procedure is slit, a tooth slot portion is subjected to punching, then a magnetic yoke portion is processed via winding formation to produce the high-Al non-oriented silicon steel wound iron core, and a strain σ of the iron core during winding formation is controlled to be 5%.

### (8) Secondary annealing

The high-Al non-oriented silicon steel wound iron core obtained by winding formation is subjected to secondary annealing under the pure N₂ protective atmosphere, where an annealing temperature T₆ is 900°C.

It is detected that the iron loss P_{1.5/50} and the magnetic induction B₅₀₀₀ of the non-oriented silicon steel after secondary annealing procedure are shown in table T2.

### Embodiment 3

A preparation method for a high-Al non-oriented silicon steel wound iron core includes the following procedures.

### (1) Molten steel smelting

The chemical composition of the molten steel finally obtained by smelting is described above, and details are provided in Table 1.

Specifically, the molten steel smelting procedure includes the following steps carried out in sequence.

### a. Hot metal KR desulfurization

Hot metal is subjected to desulfurization treatment in a KR desulfurization device, a slag skimming rate is controlled to be 98%, so that an S content in the hot metal is 0.0008% upon exiting the station.

### b. Converter smelting

The hot metal after desulfurization is fed into a converter to be mixed with scrap to form liquid steel, followed by dephosphorization and desiliconization. Tapping is carried out when contents of S, P and N in the molten steel reach are as follows: 0.0018% of S, 0.02% of P, and 0.0016% of N, respectively. The scrap consists entirely of recycled non-oriented silicon steel scrap, accounting for 12% of the total converter charge.

### c. RH vacuum refining

RH vacuum circulating degassing equipment is configured to conduct vacuum decarburization, deoxidation, alloying and inclusion removal on the molten steel after converter smelting. During RH vacuum refining, element O in the molten steel during converter tapping is used for decarbonization, and an alloying element Si is used for deoxidation. During alloying, the alloying element Si is added prior to an alloying element Al, and then metal Sn or Sb is added based on the actual Si/Al content. Finally, clean circulation is carried out under a vacuum condition to effectively remove inclusions from the molten steel.

### (2) Continuous casting

The molten steel obtained from the molten steel smelting procedure is continuously cast into a continuously cast slab with a thickness of 220 mm by using continuous casting equipment. The chemical composition of the continuously cast slab is described above, and details are provided in Table 1.

A continuous casting mold employs a special mold flux, and the mold flux includes the following chemical composition in mass percentage: 28% to 36% of SiO₂, less than or equal to 5% of MgO, 16% to 24% of CaO, less than or equal to 5% of Fe₂O₃, less than or equal to 5% of Al₂O₃, 13% to 15% of Na₂O, 8% to 14% of CaF, 1.1% to 1.5% of Li₂O, 4.5% to 5.5% of B₂O₃, less than or equal to 1.5% of T.C, and 1.9% to 2.1% of heating agent. The heating agent is a calcium-silicon alloy, where a mass percentage of Ca is 40%, and a mass percentage of Si is 60%. The mold flux has a binary basicity ranging from 0.61 to 0.63, a melting point of 1000±40°C, and viscosity of 0.2±0.05 Pa·s.

During continuous casting, electromagnetic stirring is used in a secondary cooling zone, with a stirring current of 400 A, a stirring frequency of 8 Hz, and a continuous casting speed of 1.2±0.1 m/min.

### (3) Hot rolling

The continuously cast slab obtained from the continuous casting procedure is fed into the heating furnace for heating, where a charging temperature of the continuously cast slab is 500°C, a heating temperature T₁ is 1110°C, the heating time ranges from 160 min to 180 min. Then, the continuously cast slab is fed into a two-stand rough rolling mill for six passes of rough rolling, specifically, the continuously cast slab is subjected to one pass of rough rolling on a first stand and is then fed into a second stand for five passes of roughing rolling. Subsequently, continuously cast slab is fed into a seven-stand finishing mill for seven passes of finish rolling, where a finish rolling start temperature is 930°C, a finish rolling temperature T₂ is 820°C, and a total reduction rate of the finish rolling is 94%. Ultimately, a hot-rolled coil with a thickness of 1.8 mm is obtained by coiling at a temperature T₃ of 547°C.

### (4) Acid pickling

The acid pickling is carried out in three stages. An acid pickling solution used in a first stage is a mixed solution of NH₄HF₂+HCl, where a concentration of NH₄HF₂ is 60 g/L, a concentration of HCl is 190 g/L, an acid pickling temperature T₄ is 95°C, and acid pickling time t is 18 s. An acid pickling solution used in a second stage is a mixed solution of NH₄HF₂+HCl, where a concentration of NH₄HF₂ is 80 g/L, a concentration of HCl is 240 g/L, an acid pickling temperature T₄ is 90°C, and acid pickling time t is 15 s. An acid pickling solution used in a third stage is a mixed solution of H₂O₂+HCl, where a concentration of H₂O₂ is 50 g/L, a concentration of HCl is 120 g/L, an acid pickling temperature T₄ is 95°C, and acid pickling time t is 38 s.

### (5) Cold rolling

Hot-rolled strip steel after the acid pickling procedure is subjected to continuous cold rolling using a five-stand cold rolling mill to obtain a cold-rolled hard coil with a thickness of a 0.30 mm, where a reduction ratio of each pass is controlled to be 25% to 35%, and a total reduction ratio is controlled to be 83.3%.

### (6) Primary annealing

The cold-rolled hard coil obtained from the cold rolling procedure is fed into an annealing furnace for high-temperature annealing under a pure N₂ protective atmosphere, where an annealing temperature T₅ is 985°C, and annealing time is 100 s. A steel coil after high-temperature annealing is controlled to complete full recrystallization, with an average grain size of 70 µm. Afterwards, the steel coil after high-temperature annealing is subjected to cooling, coating and finishing to obtain non-oriented silicon steel. During cooling, a cooling rate is controlled to be ≤10°C/s before cooling to 400°C to 550°C.

It is detected that the iron loss P_{1.5/50}, the magnetic induction B₅₀₀₀, the yield strength YS and the elongation of the non-oriented silicon steel after primary annealing procedure are shown in Table 2.

### (7) Winding formation

After the non-oriented silicon steel obtained from the primary annealing procedure is slit, a tooth slot portion is subjected to punching, then a magnetic yoke portion is processed via winding formation to produce the high-Al non-oriented silicon steel wound iron core, and a strain σ of the iron core during winding formation is controlled to be 8%.

### (8) Secondary annealing

The high-Al non-oriented silicon steel wound iron core obtained by winding formation is subjected to secondary annealing under the pure N₂ protective atmosphere, where an annealing temperature T₆ is 960°C.

It is detected that the iron loss P_{1.5/50} and the magnetic induction B₅₀₀₀ of the non-oriented silicon steel after secondary annealing procedure are shown in table T2.

**Table 2**

| Embodiment | Non-oriented silicon steel after primary annealing | | | | Wound iron core | |
|---|---|---|---|---|---|---|
| | Iron loss P_{1.5/50} /W/Kg | Magnetic induction B₅₀₀₀ /T | Yield strength YS/MPa | Elongation /% | Iron loss P_{1.5/50} /W/Kg | Magnetic induction B₅₀₀₀ /T |
| 1 | 2.83 | 1.72 | 208 | 30 | 2.30 | 1.76 |
| 2 | 2.65 | 1.70 | 233 | 27 | 2.18 | 1.73 |
| 3 | 2.38 | 1.68 | 241 | 26 | 2.01 | 1.70 |

In addition, the non-oriented silicon steel provided in Embodiments 1 to 3 all exhibits qualified surface quality without defects such as blackening. No cracking occurs during the preparation of the wound iron core, and the electromagnetic properties of the motor are also fully qualified when applied to the in-wheel motors.

It should be understood that, although this specification is described according to an implementation, not each implementation includes merely one independent technical solution. This description manner of the specification is for clarity only. A person skilled in the art should take the specification as a whole, and the technical solutions in each implementation may be appropriately combined to form another implementation that may be understood by a person skilled in the art.

The detailed description listed above is merely a specific description of feasible implementation manners of the present disclosure, and is not intended to limit the scope of protection of the present disclosure. Any equivalent implementation or change that is not departed from the technical spirit of the present disclosure shall fall within the scope of protection of the present disclosure.

## Claims

1. A preparation method for a high-Al non-oriented silicon steel wound iron core, comprising the following procedures carried out in order: molten steel smelting, continuous casting, hot rolling, acid pickling, cold rolling, primary annealing, winding forming, and secondary annealing;
during the molten steel smelting, molten steel finally obtained by smelting comprises the following chemical composition in mass percentage: less than or equal to 0.0025% of C, 1.0% to 1.5% of Si, 1.0% to 2.0% of Al, 0.2% to 0.4% of Mn, less than or equal to 0.002% of Nb, less than or equal to 0.002% of V, less than or equal to 0.002% of Ti, less than or equal to 0.03% of Ni, less than or equal to 0.03% of Cr, less than or equal to 0.01% of Cu, less than or equal to 0.002% of N, 0.015% to 0.020% of P, less than or equal to 0.0015% of S, Sn or Sb, as well as Fe and other inevitable impurities, wherein Sn=0.01 × Si+0.04 × Al, Sb=0.01 × Si+0.04 × Al, and Al/Si=1.0 to 1.4 and C+S+O+N≤0.007%;
during the hot rolling, a continuously cast slab obtained from the continuous casting procedure is subjected to heating, rough rolling, finish rolling, and coiling in sequence to a hot-rolled coil, wherein a heating temperature T₁ satisfies that T₁=1160-20 × [Si]-10 × [Al], heating time ranges from 160 min to 180 min, a finish rolling start temperature ranges from 910°C to 960°C, a finish rolling temperature T₂ satisfies that T₂=880-20 × [Si]-15 × [Al], and a coiling temperature T₃ satisfies that T₃=600+5 × [Si]-30 × [Al];
during the acid pickling, the acid pickling is carried out in three stages, an acid pickling solution used in a first stage is a mixed solution of NH₄HF₂+HCl, wherein a concentration of NH₄HF₂ ranges from 60 g/L to 80 g/L, and a concentration of HCl ranges from 150 g/L to 200 g/L; an acid pickling solution used in a second stage is a mixed solution of NH₄HF₂+HCl, wherein a concentration of NH₄HF₂ ranges from 80 g/L to 100 g/L, and a concentration of HCl ranges from 200 g/L to 250g/L; an acid pickling solution used in a third stage is a mixed solution of H₂O₂+HCl, wherein a concentration of H₂O₂ ranges from 30 g/L to 50 g/L, and a concentration of HCl ranges from 100 g/L to 120 g/L; and acid pickling time t and acid pickling temperature T₄ for each of the three stages correspond to each other and satisfy the following formula: $\left[Si\right] + 1.2 \times \left[Al\right] \leq t ⋅ B ⋅ exp \left(-\frac{1268}{0.475 \times \left({T}_{4}+274.15\right)}\right) \leq 0.3 \times \left[Si\right] + 0.2 \times \left[Al\right] + 4 ,$
wherein B=-0.01 × [NH₄HF₂]²+2 × [HCl]-75, t is in seconds, all temperatures are in °C, [Si] represents a mass percentage of element Si the continuously cast slab, [Al] represents a mass percentage of element Al in the continuously cast slab, [NH₄HF₂] represents s a concentration value of NH₄HF₂ in the mixed solution, and [HCl] represents a concentration value of HCl in the mixed solution.

2. The preparation method for a high-Al non-oriented silicon steel wound iron core according to claim 1, wherein during the primary annealing, a cold-rolled hard coil obtained from the cold rolling procedure is subjected to high-temperature annealing under a pure N₂ protective atmosphere, wherein an annealing temperature T₅ satisfies that T₅=900+30 × [Si]+20 × [Al], in °C, and annealing time ranges from 80 s to 100 s; and a steel coil after high-temperature annealing is controlled to complete full recrystallization, with an average grain size from 70 µm to 90 µm, wherein [Si] represents a mass percentage of element Si in the continuously cast slab, and [Al] represents a mass percentage of element Al in the continuously cast slab.

3. The preparation method for a high-Al non-oriented silicon steel wound iron core according to claim 2, wherein during the primary annealing, the steel coil after high-temperature annealing is subjected to cooling, coating, and finishing to obtain non-oriented silicon steel, and a cooling rate is controlled to be ≤10°C/s before cooling to 400°C to 550°C.

4. The preparation method for a high-Al non-oriented silicon steel wound iron core according to claim 3, wherein the non-oriented silicon steel obtained from the primary annealing procedure has an iron loss P_{1.5/50} of ≤3.0 W/kg, a magnetic induction B₅₀₀₀ of ≥1.67 T, a yield strength YS ranging from 200 MPa to 260 MPa, and an elongation of ≥25%.

5. The preparation method for a high-Al non-oriented silicon steel wound iron core according to claim 1, wherein the secondary annealing procedure is carried out under a pure N₂ protective atmosphere at an annealing temperature T₆ satisfies that T₆=800+2000 × σ, in ° C, and σ is a strain of the iron core during winding formation.

6. The preparation method for a high-Al non-oriented silicon steel wound iron core according to claim 1, wherein during the winding formation, after the non-oriented silicon steel obtained from the primary annealing procedure is slit, a tooth slot portion is subjected to punching, then a magnetic yoke portion is processed via winding formation to produce the high-Al non-oriented silicon steel wound iron core, and a strain σ of the iron core during winding formation is controlled to be 2% to 8%.

7. The preparation method for a high-Al non-oriented silicon steel wound iron core according to claim 1, wherein during the hot rolling, the continuously cast slab is fed into a heating furnace for heating, and a charging temperature of the continuously cast slab ranges from 500°C to 600°C; during the rough rolling, two stands are used to conduct six passes of rough rolling, comprising one pass of rough rolling in a first stand and five passes of roughing rolling in the second stand; during finish rolling, a seven-stand finishing mill is used to conduct seven passes of finish rolling; and a total reduction rate of the finish rolling is controlled to be 93% to 94%, and a thickness of the hot-rolled coil ranges from 1.8 mm to 2.0 mm.

8. The preparation method for a high-Al non-oriented silicon steel wound iron core according to claim 1, wherein during the cold rolling, hot-rolled strip steel after the acid pickling procedure is subjected to continuous cold rolling using a five-stand cold rolling mill to obtain a cold-rolled hard coil with a thickness ranging from 0.3 mm to 0.4 mm, a reduction ratio of each pass controlled to be 25% to 35%, and a total reduction ratio is controlled to be 80% to 90%.

9. A high-Al non-oriented silicon steel wound iron core, which is prepared by using the preparation method for the high-Al non-oriented silicon steel wound iron core according to any one of claims 1-8.

10. The high-Al non-oriented silicon steel wound iron core according to claim 9, wherein the non-oriented silicon steel has an iron loss P_{1.5/50} of ≤2.5 W/kg, and a magnetic induction B₅₀₀₀ of ≥1.72 T.
